Europäisches Patentamt

European Patent Office

Office européen des brevets

(19)

(11) Veröffentlichungsnummer: **0 515 802 B1**

(12) **EUROPÄISCHE PATENTSCHRIFT**

(45) Veröffentlichungstag der Patentschrift: **28.09.94**

(51) Int. Cl.⁵: **B21C 37/12**, B23D 25/04

(21) Anmeldenummer: **92105837.6**

(22) Anmeldetag: **04.04.92**

(54) **Schraubennahtrohrwerk zum Herstellen von geschweissten Schraubennahtrohren aus Metallband.**

(30) Priorität: **29.05.91 DE 4117555**

(43) Veröffentlichungstag der Anmeldung:
**02.12.92 Patentblatt 92/49**

(45) Bekanntmachung des Hinweises auf die
Patenterteilung:
**28.09.94 Patentblatt 94/39**

(84) Benannte Vertragsstaaten:
**BE CH DE ES FR GB GR IT LI SE**

(56) Entgegenhaltungen:
**DE-B- 1 114 767**

**PATENT ABSTRACTS OF JAPAN vol. 8, no.
28 (M-274)(1465) 7. Februar 1984 & JP-A-58
186 517 (SHIN NIPPON SEITETSU K.K.) 31
Oktober 1983**

**SOVIET INVENTIONS ILLUSTRATED Week
C28, 20-08-1980 Derwent Publications
Ltd.,London GB & SU-A-677786**

(73) Patentinhaber: **Hoesch Maschinenfabrik
Deutschland Aktiengesellschaft
Borsigstrasse 22
D-44145 Dortmund (DE)**

(72) Erfinder: **Orth, Heinz-Dietmar
Antoniusstrasse 48
W-4600 Dortmund 30 (DE)**

## Beschreibung

Die Erfindung bezieht sich auf ein Schraubennahtrohrwerk zum Herstellen von geschweißten Schraubennahtrohren aus Metallband, mit einem Bandtreiber, einem Rohrformer, einer Schweißeinrichtung, einem Rohrauslauf und einer daran angeordneten Rohrtrenneinrichtung, deren in Rohrachsrichtung verschiebbare Trenneinheit von einem in Rohrproduktionsrichtung bewegten und sich um seine Rohrachse drehenden Rohrstrang einzelne Schraubennahtrohre bestimmter Länge abtrennt, mit einer Maschinensteuerung, die einerseits den Schweißspalt zwischen dem Bandschenkel und dem Rohranfang und andererseits die Geschwindigkeit der Trenneinheit in Rohrproduktionsrichtung steuert.

Durch die DE-OS 1 427 145 ist eine Rohrtrenneinrichtung für ein Schraubennahtrohrwerk bekannt, die von einem in Rohrproduktionsrichtung bewegten und sich um seine Rohrachse drehenden Rohrstrang einzelne Schraubennahtrohre bestimmter Länge abtrennt.

Eine solche Rohrtrenneinrichtung enthält einen Antrieb zum Bewegen einer Trenneinheit in Rohrachsrichtung und eine Steuereinrichtung zum Steuern der Geschwindigkeit der Trenneinheit in Rohrproduktionsrichtung.

Die Steuereinrichtung ist mit zwei an die äußere Rohrmantelfläche andrückbaren Rollen ausgeführt, die durch den Rohrstrang in Drehung versetzt und in Rohrproduktionsrichtung bewegt werden.

Die Bewegung dieser Rollen in Rohrproduktionsrichtung wird hier benutzt zur Steuerung der Geschwindigkeit der Trenneinheit in Rohrproduktionsrichtung.

Der bekannten Steuereinrichtung zum Steuern der Geschwindigkeit der Trenneinheit in Rohrproduktionsrichtung haftet der Nachteil an, daß der zwangsläufig in Rohrproduktionsrichtung auftretende Schlupf zwischen dem Rohrstrang und den Rollen zu weit aus einer Kreisebene des Rohrstranges abweichenden Rohrtrennschnitten führt. Hiermit verbunden sind ziemliche Rohrlängenverluste während der Bearbeitung der Rohrenden in Rohrfasmaschinen.

Der Erfindung liegt die Aufgabe zugrunde, ein Schraubennahtrohrwerk der eingangs genannten Art so auszubilden, daß es Rohrtrennschnitte mit sehr geringer Abweichung von einer Kreisebene des Rohrstranges ermöglicht.

Erfindungsgemäß wird diese Aufgabe dadurch gelöst, daß zum Steuern der Geschwindigkeit der Trenneinheit in Rohrproduktionsrichtung ein Meßgerät zum Messen der Bandgeschwindigkeit, eine Meßeinrichtung zum Messen des Bandeinlaufwinkels zwischen dem Bandschenkel und der Rohrachse und eine Meßkamera zum Messen der axialen Abweichung des Rohrtrennschnitts in einem zu der Trenneinheit gebildeten Rohrumfangswinkel vorgesehen sind.

Das Meßgerät zum Messen der Bandgeschwindigkeit, die Meßeinrichtung zum Messen des Bandeinlaufwinkels zwischen dem Bandschenkel und der Rohrachse und die Meßkamera zum Messen der axialen Abweichung des Rohrtrennschnitts in dem zu der Trenneinheit gebildeten Rohrumfangswinkel sind an eine Auswertestation angeschlossen.

Zweckmäßigerweise ist der Rohrumfangswinkel zwischen der Trenneinheit und der Meßkamera kleiner als $\pi/2$.

Im folgenden wird die Erfindung anhand einer Zeichnung, in der ein Ausführungsbeispiel schematisch dargestellt ist, näher beschrieben.

Es zeigt

Fig. 1　　ein Schraubennahtrohrwerk zum Herstellen von geschweißten Schraubennahtrohren aus Metallband im Grundriß,

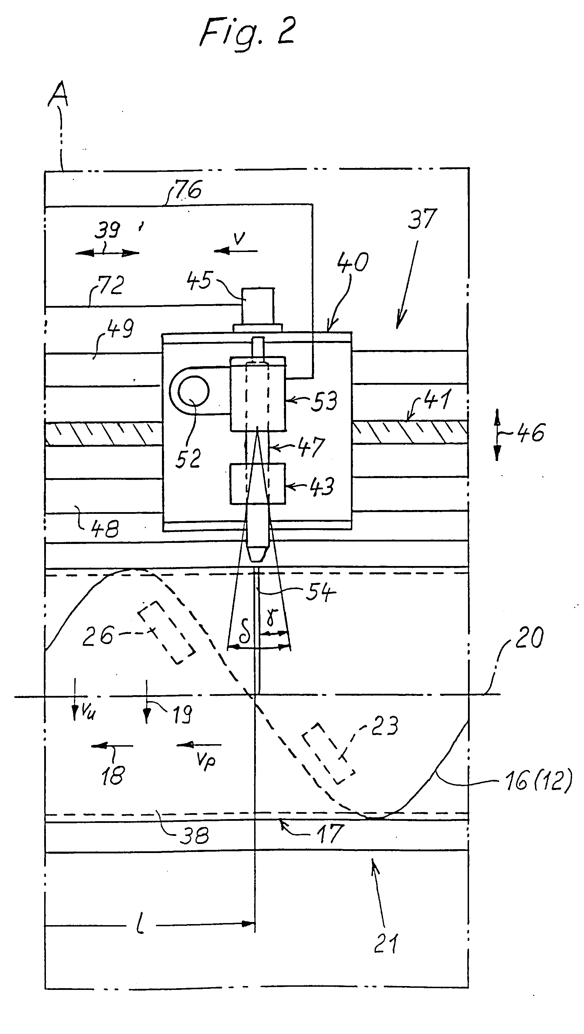

Fig. 2　　einen Teilausschnitt A der Fig. 1 in vergrößertem Maßstab,

Fig. 3　　einen Schnitt entsprechend der Linie III-III in Fig. 1 in vergrößertem Maßstab, wobei die den Rohrstrang führenden Tragrollen achsparallel zur Rohrachse dargestellt sind.

Ein Schraubennahtrohrwerk 1 hat einen von einem Motor 2 angetriebenen Bandtreiber 3, der ein Metallband 4 aus Stahl mit einer Bandgeschwindigkeit $v_b$ in einen Rohrformer 5 schiebt.

Gemessen wird die Bandgeschwindigkeit $v_b$ mit einem an den Motor 2 angekuppelten Meßgerät 6.

In dem Rohrformer 5 wird kontinuierlich das Metallband 4 auf den Rohrdurchmesser d gebogen.

Bei diesem Biegevorgang in einem Dreiwalzensystem (nicht dargestellt) schweißt ein Lichtbogenschweißkopf 7 die linke Bandkante 8 des Bandschenkels 9 an die geformte Bandkante 10 des Rohranfanges 11 durch Legen einer Innenschweißnaht 12.

Der Lichtbogenschweißkopf 7 ist an einem Innenarm 13 des Rohrformers 5 angeordnet.

Ein Lichtbogenschweißkopf 14, der auf einem Außenarm 15 des Rohrformers 5 angeordnet ist, erzeugt nach einer halben Schraubenwindung des Rohranfangs 11 eine Außenschweißnaht 16.

Aus dem Rohrformer 5 tritt ein fertiggeschweißter Rohrstrang 17 heraus, der eine Bewegung in Rohrproduktionsrichtung (Pfeil 18) und eine Drehbewegung (Pfeil 19) um seine Rohrachse 20 ausführt.

Zur Führung des Rohrstranges 17 wird ein schwenkbarer Rohrauslauf 21 mit einer Führungstraverse 22 und sechs Tragrollen 23, 24, 25, 26, 27, 28 benutzt.

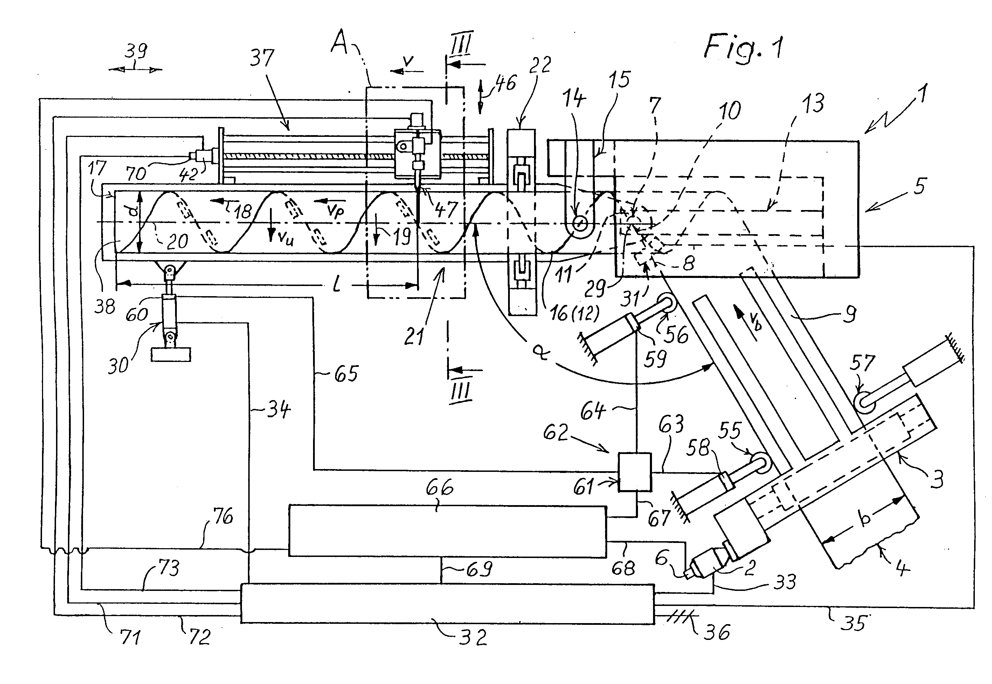

Die Schwenkachse 29 des Rohrauslaufs 21, die in Fig. 1 mit der Schweißpunktmitte des Lichtbogenschweißkopfes 7 zusammenfällt, ist als Scheitelpunkt des Bandeinlaufwinkels $\alpha$ zwischen dem Bandschenkel 9 und der Rohrachse 20 aufzufassen.

Eine Verschiebevorrichtung 30, die die Schwenkbewegung des Rohrauslaufs 21 erzeugt, und eine Meßvorrichtung 31 zum Messen des Abstandes zwischen der linken Bandkante 8 des Bandschenkels 9 und der geformten Bandkante 10 des Rohranfanges 11 werden benutzt zur Steuerung des Schweißspaltes.

Der Motor 2, die Verschiebevorrichtung 30 und die Meßvorrichtung 31 sind zur Durchführung der Schweißspaltsteuerung an eine Maschinensteuerung 32 angeschlossen, und zwar mit je einer Leitung 33, 34, 35. Gespeist wird die Maschinensteuerung 32 von einem Stromnetz 36.

An dem Rohrauslauf 21 ist eine Rohrtrenneinrichtung 37 angeordnet, die von dem in Rohrproduktionsrichtung (Pfeil 18) bewegten und sich um seine Rohrachse 20 drehenden Rohrstrang 17 einzelne Schraubennahtrohre 38 mit bestimmter Länge 1 abtrennt.

Die Rohrtrenneinrichtung 37 enthält einen in Rohrachsrichtung (Doppelpfeil 39) verschiebbaren Längsschlitten 40 mit einem Spindeltrieb 41, einen Motor 42 zur Erzeugung der Längsbewegung, einen auf dem Längsschlitten 40 verschiebbar angeordneten Querschlitten 43 mit einem Spindeltrieb 44, einen Motor 45 zur Erzeugung der Querbewegung (Doppelpfeil 46) und eine auf dem Querschlitten 43 angeordnete Trenneinheit 47 in Form eines Plasmaschneidbrenners.

Die Führung des Längsschlittens 40 ist gewährleistet durch zwei Rundstangen 48, 49, die des Querschlittens 43 durch zwei Rundstangen 50, 51.

Auf dem Längsschlitten 40 ist eine Führungssäule 52 zur Aufnahme einer Meßkamera 53 befestigt.

Die Meßkamera 53 mißt die axiale Abweichung des Rohrtrennschnitts 54 in einem zu der Trenneinheit 47 gebildeten Rohrumfangswinkel $\beta$. In diesem Ausführungsbeispiel ist der Rohrumfangswinkel $\beta$ kleiner als $\pi/2$.

Die Bandbreite b des Metallbandes 4, der Rohrdurchmesser d und der Bandeinlaufwinkel $\alpha$ stehen in mathematischer Beziehung zueinander wie folgt:

$$\sin\,(\alpha - \pi/2) = \frac{b}{d \cdot \pi}$$

Bei Kenntnis der Bandgeschwindigkeit $v_b$ und des Bandeinlaufwinkels $\alpha$ lassen sich die Rohrproduktionsgeschwindigkeit $v_p$ und die Rohrumfangsgeschwindigkeit $v_u$ wie folgt ermitteln:

$$v_p = v_b \cdot \sin\,(\alpha - \pi/2)$$
$$v_u = v_b \cdot \cos\,(\alpha - \pi/2)$$

Die Rohrproduktionsgeschwindigkeit $v_p$ und die Rohrumfangsgeschwindigkeit $v_u$ sind gewissen Schwankungen unterworfen, da insbesondere säbelförmige Metallbänder 4 mehr oder weniger starke Änderungen des Bandeinlaufwinkels $\alpha$ auslösen.

In dem vorliegenden Ausführungsbeispiel ist die Rohrumfangsgeschwindigkeit $v_u$ stets gleich der Trennschnittgeschwindigkeit.

Zwischen dem Bandtreiber 3 und dem Rohrformer 5 sind zum seitlichen Führen des Metallbandes 4 drei Führungsrollen 55, 56, 57 angeordnet, von denen die Führungsrollen 55, 56 je ein Wegmeßelement 58, 59 aufweisen.

Diese Wegmeßelemente 58, 59 und ein an der Verschiebevorrichtung 30 angebrachtes Wegmeßelement 60 stellen zusammen mit einem Rechner 61 eine Meßeinrichtung 62 zum Messen des Bandeinlaufwinkels $\alpha$ dar.

Die Wegmeßelemente 58, 59, 60 sind mit je einer Leitung 63, 64, 65 an den Rechner 61 angeschlossen.

Der Rechner 61 und das Meßgerät 6 zum Messen der Bandgeschwindigkeit $v_b$ sind verbunden mit einer Auswertestation 66 durch je eine Leitung 67, 68.

Eine Leitung 69 überbrückt die Auswertestation 66 mit der Maschinensteuerung 32.

An die Maschinensteuerung 32 sind ferner die Motoren 42, 45 und ein an den Motor 42 angekuppeltes Meßgerät 70 angeschlossen mit je einer Leitung 71, 72, 73.

Das Meßgerät 70 mißt die Geschwindigkeit v der Trenneinheit 47 in Rohrproduktionsrichtung (Pfeil 18).

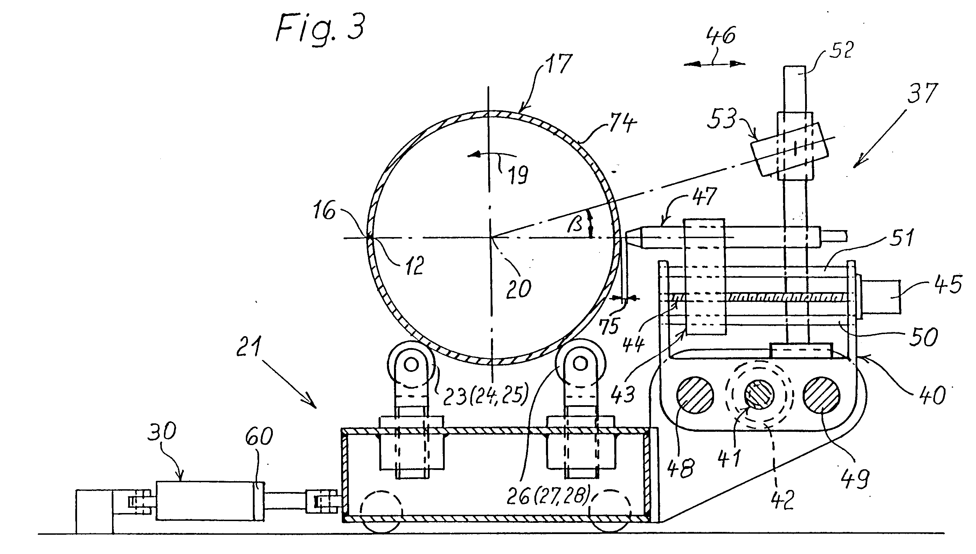

Der Motor 45 erzeugt die Querbewegung (Doppelpfeil 46) der Trenneinheit 47 in der Weise, daß zwischen der äußeren Mantelfläche 74 des Rohrstranges 17 und der Trenneinheit 47 ein nahezu gleichbleibender Abstand 75 eingehalten wird (Fig. 3).

Während des Rohrtrennvorganges in dem Rohrumfangsbereich von 0 bis $\beta$ bewirkt die Auswertestation 66 über die Maschinensteuerung 32 eine Steuerung der Geschwindigkeit v dar Trenneinheit 47 in Abhängigkeit von der Bandgeschwindigkeit $v_b$ und dem Bandeinlaufwinkel $\alpha$.

Beim weiteren Rohrtrennvorgang in dem Rohrumfangsbereich von $\beta$ bis $2\pi$ wird zusätzlich mit Hilfe der Meßkamera 53 eine Steuerung der Geschwindigkeit v der Trenneinheit 47 in Abhängigkeit von der axialen Abweichung des Rohrtrennschnitts 54 durchgeführt.

Die Meßkamera 53, die über eine Leitung 76 mit der Auswertestation 66 verbunden ist, mißt die Änderung des Lichtreflexionswinkels $\gamma$ als axiale Abweichung des Rohrtrennschnitts 54 in dem zu der Trenneinheit 47 gebildeten Rohrumfangswinkel $\beta$.

Der Lichtaussendewinkel der Meßkamera 53 ist mit $\delta$ bezeichnet.

## Patentansprüche

1. Schraubennahtrohrwerk (1) zum Herstellen von geschweißten Schraubennahtrohren (38) aus Metallband (4), mit einem Bandtreiber (3), einem Rohrformer (5), einer Schweißeinrichtung (7), einem Rohrauslauf (21) und einer daran angeordneten Rohrtrenneinrichtung (37), deren in Rohrachsrichtung (39) verschiebbare Trenneinheit (47) von einem in Rohrproduktionsrichtung (18) bewegten und sich um seine Rohrachse (20) drehenden Rohrstrang (17) einzelne Schraubennahtrohre (38) bestimmter Länge abtrennt, mit einer Maschinensteuerung, die einerseits den Schweißspalt zwischen dem Bandschenkel und dem Rohranfang und andererseits die Geschwindigkeit (V) der Trenneinheit (47) in Rohrproduktionsrichtung (18) steuert, dadurch gekennzeichnet, daß zum Steuern der Geschwindigkeit (v) der Trenneinheit (47) in Rohrproduktionsrichtung (Pfeil 18) ein Meßgerät (6) zum Messen der Bandgeschwindigkeit ($v_b$), eine Meßeinrichtung (62) zum Messen des Bandeinlaufwinkels ($\alpha$) zwischen dem Bandschenkel (9) und der Rohrachse (20) und eine Meßkamera (53) zum Messen der axialen Abweichung des Rohrtrennschnitts (54) in einem zu der Trenneinheit (47) gebildeten Rohrumfangswinkel ($\beta$) vorgesehen sind.

2. Schraubennahtrohrwerk nach Anspruch 1, dadurch gekennzeichnet, daß das Meßgerät (6) zum Messen der Bandgeschwindigkeit ($v_b$),die Meßeinrichtung (62) zum Messen des Bandeinlaufwinkels ($\alpha$) zwischen dem Bandschenkel (9) und der Rohrachse (20) und die Meßkamera (53) zum Messen der axialen Abweichung des Rohrtrennschnitts (54) in dem zu der Trenneinheit (47) gebildeten Rohrumfangswinkel ($\beta$) an eine Auswertestation (66) angeschlossen sind.

3. Schraubennahtrohrwerk nach den Ansprüchen 1 und 2, dadurch gekennzeichnet, daß der Rohrumfangswinkel ($\beta$) zwischen der Trenneinheit (47) und der Meßkamera (53) kleiner als $\pi/2$ ist.

## Claims

1. Apparatus (1) for producing welded helically seamed tubes (38) from metal strip (4), said apparatus having a strip feeder (3), a tube former (5), a welding device (7), a tube discharge device (21) and a tube separating device (37) arranged at the tube discharge device and the separating unit (47) of the tube separating device (37) can be displaced in the direction of the tube axis (39), the said separating unit separating individual helically seamed tubes (38) of predetermined lengths from a run of tubing (77) being moved in the direction (18) of the tube production and rotating about its tube axis (20), said apparatus having a machine control unit, which controls on the one side the weld gap between the strip limb and the beginning of the tube and on the other side the velocity (v) of the separating unit (47) in the direction (18) of the tube production, characterised in that for the purpose of controlling the velocity (v) of the separating unit (47) in the direction of the tube production (arrow 18), a measuring device (6) is provided to measure the strip velocity ($v_b$), a measuring device (62) is provided to measure the strip entry angle ($\alpha$) between the strip limb (9) and the tube axis (20) and a measuring camera (53) is provided to measure the axial deviation of the tube separating cut (54) in a tube periphery angle ($\beta$) formed with the separating unit (47).

2. Apparatus for producing helically seamed tubes according to claim 1, characterised in that the measuring device (6), which measures the strip velocity ($v_b$), the measuring device (62), which measures the strip entry angle ($\alpha$) between the strip limb (9) and the tube axis (20), and the measuring camera (53), which measures the axial deviation of the tube separating cut (54) in the tube periphery angle ($\beta$) formed with the separating unit (47), are connected to an evaluating station (66).

3. Apparatus for producing helically seamed tubes according to claims 1 and 2, characterised in that the tube periphery angle ($\beta$) between the separating unit (47) and the measuring camera (53) is smaller than $\pi/2$.

## Revendications

1. Machine à tubes à jonction hélicoïdale (1), pour la fabrication de tubes soudés à jonction hélicoïdale (38) à partir d'un feuillard métallique (4), avec un dispositif d'avancement du feuillard (3), un dispositif de formation d'un tube (5), un dispositif de soudage (7), une sortie de tube (21) et un dispositif (37) de découpage du tube y associé, dont l'unité de séparation (47), mobile dans la direction axiale du tube (39), découpe des tubes à jonction hélicoïdale (38) individuels de longueur définie dans un tube continu (17) déplacé dans la direction (18) de production du tube et tournant autour de son axe de tube (20), avec une commande de machine qui commande d'une part l'interstice de soudage entre le bout du feuillard et le début du tube et d'autre part la vitesse (v) de l'unité de séparation (47) dans la direction de production de tube (18), caractérisée en ce que, pour la commande de la vitesse (v) de l'unité de séparation (47) dans la direction de production du tube (flèche 18) sont prévus un appareil de mesure (6) pour la mesure de la vitesse du feuillard ($v_b$), un dispositif de mesure (62) pour la mesure de l'angle de spiralage ($\alpha$) du feuillard, formé entre le bout de feuillard (9) et l'aie (20) du tube, et une caméra de mesure (53) pour mesurer l'écart axial de la coupe (54) du tube, à un angle ($\beta$) à la surface du tube par rapport à l'unité de séparation (47).

2. Machine à tubes à jonction hélicoïdale selon la revendication 1, caractérisée en ce que l'appareil de mesure (6) pour la mesure de la vitesse ($v_b$) du feuillard, le dispositif de mesure (62) pour la mesure de l'angle de spiralage ($\alpha$) du feuillard, formé entre le bout de feuillard (9) et l'axe (20) du tube, et la caméra de mesure (53) pour la mesure de l'écart axial de la coupe (54) du tube, à l'angle périphérique ($\beta$) du tube, par rapport à l'unité de séparation (47), sont raccordés à un poste d'évaluation (66).

3. Machine à tubes à jonction hélicoïdale selon les revendications 1 et 2, caractérisée en ce que l'angle périphérique ($\beta$) du tube, entre l'unité de séparation (47) et la caméra de mesure (53), est inférieur à $\pi/2$.

Fig. 1

EP 0 515 802 B1

# Fig. 2

Fig. 3

EP 0 515 802 B1